# EUROPEAN PATENT APPLICATION

(11) **EP 2 884 686 A1**
(43) Date of publication of application: **17.06.2015**
(21) Application number: 13197228.3
(22) Date of filing: 13.12.2013
(51) Int. Cl.: H04L 1/06, H04L 5/00, H04L 27/26

(54) **Method and communication system with improved physical layer telegram**

(71) Applicant: Siemens Aktiengesellschaft, 80333 München (DE)
(72) Inventor: Hulbert, Anthony Peter, Bassett Green, Southampton, Hampshire SO16 3DF (GB)

(57) **Abstract**

The reliability of wireless radio communication preferably for industrial control shall be improved. For this, a system and a method of wirelessly transmitting data between two transceivers (TC1, TC2) are provided, each transceiver having at least two antennas (All, A12, A21, A22), by performing transmission according to a telegram for transmission being characterized by: operation of both transceivers in a TDD mode, OFDM symbols in pairs without any additional pilot-only symbol, interleaving in the frequency domain, inclusion of OFDM pilot sub-carriers at substantially regular frequency intervals in at least one pair of the OFDM symbols, wherein both antennas of one of the transmitters are used for transmission and implementation of twin antenna Alamouti space time diversity for transmission.

## Description

The present invention relates to a method of wirelessly transmitting data between two receivers, each transceiver having at least two antennas, by performing transmission according to a specific transmission telegram. Furthermore, the present invention relates to a corresponding communication system.

Wireless radio communication links have typically been designed for applications in which modest latency is not of significant concern. However, some applications require extremely low latency that is also non varying. One such application is wireless industrial control. Here, the reliability requirement is extremely high: Typically, requirements for mean time between message transmission failure run to days or even weeks. Moreover, the bandwidth efficiency requirement is also high: typically, > 2 bps/Hz. In addition to the above, highly reliable links are required in both directions.

Prior solutions have addressed the reliability requirement using a combination of Forward Error Correction (FEC) and Automatic Repeat reQuest (ARQ) and antenna diversity. However, ARQ cannot support non varying time delays. No existing solutions come close to providing the necessary performance. Latency is also compromised in many existing solutions by the inclusion of unique words for synchronisation.

The article Alamouti, M., "A Simple Transmit Diversity Technique for Wireless Communications", IEEE Journal on Select Areas in Communications, Vol. 16, No. 8, October 1998, pp. 1451-1458, presents a simple two-branch transmit diversity scheme. Using two transmit antennas and one receive antenna, the scheme provides the same diversity order as maximal-ratio receiver combining (MRRC) with one transmit antenna, and two receive antennas. It is also shown that the scheme may easily be generalized to two transmit antennas and M receive antennas to provide a diversity order of 2M.

In view of that, it is the object of the present invention to provide a method of wirelessly transmitting data and a communication system with improved reliability.

According to the present invention, there is provided a method of wirelessly transmitting data between two transceivers, each transceiver having at least two antennas, by performing transmission according to a telegram for transmission being characterized by
- operation of both transceivers in a TDD mode,
- OFDM symbols in pairs without any additional pilot-only symbol,
- interleaving in the frequency domain,
- inclusion of OFDM pilot sub-carriers at substantially regular frequency intervals in at least one pair of the OFDM symbols, wherein both antennas of one of the transceivers are used for transmission and
- implementation of twin antenna Alamouti space time diversity for transmission.

Additionally, there is provided a communication system including two transceivers each having at least two antennas, wherein said transceivers are adapted for wirelessly transmitting data between each other according to a telegram for transmission, said telegram being characterized by:
- operation of both transceivers in a TDD mode,
- OFDM symbols in pairs without any additional pilot-only symbol,
- interleaving in the frequency domain,
- inclusion of OFDM pilot sub-carriers at substantially regular frequency intervals in at least one pair of the OFDM symbols, wherein both antennas of one of the transceivers are used for transmission and
- implementation of twin antenna Alamouti space time diversity for transmission.

The advantage of such method and communication system is that the Alamouti space time diversity is combined with diversity in the frequency domain. Such fourfold diversity leads to an improved reliability.

The above object is also solved by a method of wirelessly transmitting data between two transceivers, each transceiver having at least two antennas, by performing transmission according to a telegram for transmission being characterized by
- operation of both transceivers in a TDD mode,
- a packet having two OFDM data-only symbols and one OFDM pilot-only symbol,
- interleaving in the frequency domain,
- the duration of the OFDM pilot-only symbol being reduced compared to the duration of each OFDM data-only symbol,
- both antennas of one of the transceivers are used for transmission and
- implementation of twin antenna Alamouti space time diversity for transmission.

Furthermore, there is provided a communication system including two transceivers each having at least two antennas, wherein said transceivers are adapted for wirelessly transmitting data between each other according to a telegram for transmission, said telegram being characterized by:
- operation of both transceivers in a TDD mode,
- a packet having two OFDM data-only symbols and one OFDM pilot-only symbol,
- interleaving in the frequency domain,
- the duration of the OFDM pilot-only symbol being reduced compared to the duration of each OFDM data-only symbol,
- both antennas of one of the transceiver are used for transmission and
- implementation of twin antenna Alamouti space time diversity for transmission.

The advantage of such second method and communication system is identical to the above one, since the general concept is identical: Fourfold diversity is provided related to space time and frequency diversities. Thus, the reliability of the method or communication system, respectively, is improved. Additionally, the second method and communication system allows more payload data than the first method and communication system.

Preferably, a convolutional forward error correction code is used in each transceiver. Such convolutional forward error correction code further improves the reliability of the communication.

Each transceiver may include two antennas for reception, and twin antenna diversity is used in each transceiver for reception. This means that twin antenna diversity is used for transmission as well as for reception, i.e. in both directions.

Furthermore, TDD switching in the transceivers may be performed such that the two antennas in each transceiver are used in a transmit mode as well as in a receive mode. Thus, the twin antenna diversity is employed for duplex communication.

According to a further improvement, each symbol may be transmitted by a plurality of sub-carriers which are interleaved in the frequency domain, and the modulation of the sub-carriers is 64 QAM. Such interleaving and modulation leads to a high bandwidth efficiency.

If the data packets have two OFDM data-only symbols and one OFDM pilot-only symbol, the OFDM pilot-only symbol may be arranged between the two OFDM data-only symbols. Thus, the pilot information can be used for both data-only symbols. Moreover, a data part of each OFDM pilot-only symbol may be half as long as a data part of each OFDM data-only symbol. Consequently, the data payload is increased with respect to usual packets where pilot-only symbols have the same length as data-only symbols.

The above features develop the inventive methods further as well as the inventive communication systems.

The present invention will be explained in further detail in connection with the attached drawings, showing in
- FIG 1: an overall equipment architecture of a communication system;
- FIG 2: a basic OFDM waveform structure of a communication telegram, and
- FIG 3: an OFDM waveform structure with inserted pilot symbol of an alternative communication telegram.

The following embodiments show preferred examples of the present invention.

The embodiments are preferably based on a highly optimised bespoke waveform that combines physical layer components in unusual ways. The need for the latency/throughput overhead associated with a unique word may be removed through the use of a deterministic MAC (Medium Access Control) which implements Time Division Duplex (TDD).

The minimal air (i.e. wireless) interface telegram consists of a pair of OFDM symbols (Orthogonal Frequency-Division Multiplexing), transmitted using two antenna Alamouti space-time transmit diversity (see above-mentioned prior art document) and coherent receiver two antenna diversity, providing overall fourfold antenna diversity. As the direction of transmission is reversed according to the operation of TDD, the roles of the antennas are also reversed.

For the purposes of the industrial control, a single telegram delivery failure in one direction is sufficient to break the feedback control loop. When such failures occur, then for a fixed failure rate in either direction, it is better if the failures in opposite directions tend to happen at the same time since this roughly halves the average link failure rate. Due to reciprocity, multipath fading over the four radio paths is identical in both directions. Thus, any fading condition severe enough to cause a link failure in one direction is likely to cause it in the other direction. Thus, the use of TDD (as opposed, for example, to Frequency Division Duplex - FDD - in which the fading conditions in opposite directions are uncorrelated) is advantageous for wireless industrial control.

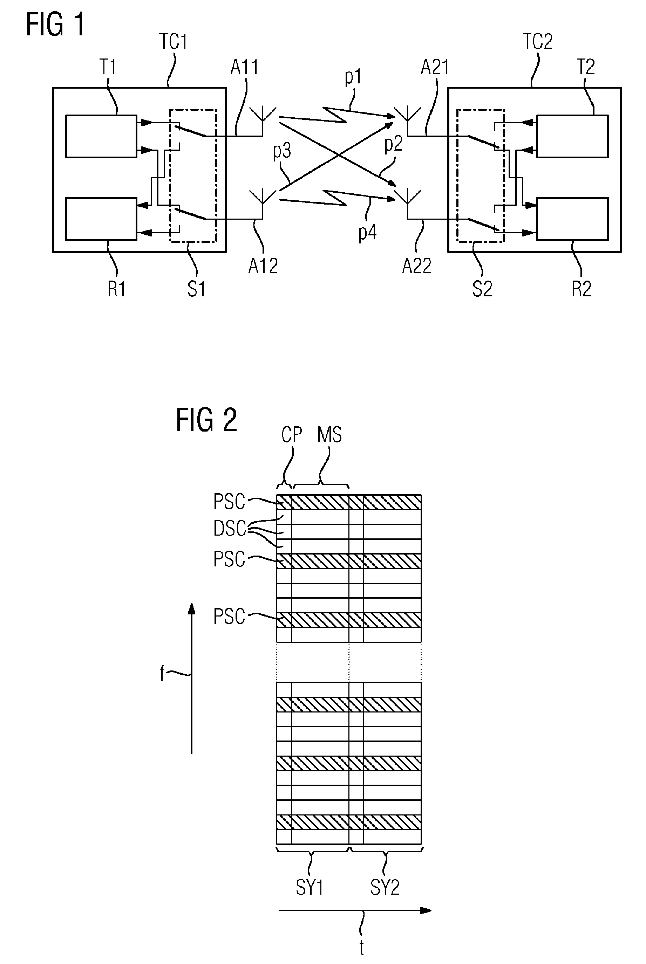

An overall equipment architecture is illustrated in FIG 1. The figure shows two transceivers TC1 and TC2. The first transceiver TC1 includes a fist transmitter T1 and first receiver R1. Furthermore, the first transceiver TC1 includes a first antenna All and a second antenna A12.

The first transmitter T1 has two output terminals which can be switched to the antennas All and A12 by switching means S1 in a first switching position. In a second switching position, switching means S1 connects the antennas All and A12 to two receiver input terminals of the first receiver R1.

The second transceiver TC2 has a similar architecture. It includes a second transmitter T2 and a second receiver R2 as well as two antennas A21 and A22 and second switching means S2. In a first switching position of second switching means S2, antennas A21 and A22 are connected to two input terminals of the second receiver R2. In a second switching position of second switching means S2, antennas A21 and A22 are connected to output terminals of second transmitter T2.

When operating, the two transceivers TC1 and TC2 communicate wirelessly with fourfold diversity between their two pairs of antennas All, A12 and A21, A22. At the "snapshot" instant of the diagram of FIG 1, transceiver TC1 is transmitting whilst transceiver TC2 is receiving. There are established four transmission paths p1 from antenna All to antenna A21, p2 from antenna A11 to antenna A22, p3 from antenna A12 to antenna A21 and p4 from antenna A12 to antenna A22. Each transmission path leads to a specific response.

Switching means S1 and S2 of the transceivers are operated in a "TDD mode". In a first part of a TDD cycle, the switching means S1 and S2 take the positions shown in FIG 1. In the complementary part of the TDD cycle, the roles will be reversed and the communication paths will be from transceiver TC2 to transceiver TC1.

The signals transmitted between both transmitters TC1 and TC2 comply with a predefined signal telegram. Such telegram leads to a specific waveform. The structure of a basic waveform used in the present embodiment is illustrated in FIG 2. The diagram shows a packet of two symbols SY1 and SY2. Both symbols SY1 and SY2 are arranged in time t immediately one after another. Both symbols SY1 and SY2 are transmitted in sub-carriers. The sub-carriers are spread over the frequency f, i.e. each symbol SY1 and SY2 is transmitted with a plurality of frequencies, each characterizing one sub-carrier.

Each symbol SY1 and SY2 comprises a plurality of symbol parts. According to the specific telegram, each symbol part is transmitted by one of a data sub-carrier DSC or a pilot sub-carrier PSC. The data sub-carriers DSC carry a part of the data of a symbol and the pilot sub-carriers PSC each carry a pilot signal for measuring the response of the corresponding transmission path. In brief we say: A symbol consists of a plurality of sub-carriers.

Each symbol part includes a cyclic prefix CP and a main OFDM symbol MS.

The diagram of FIG 2 is compressed in frequency for clarity (the centre frequency sub-carriers are not shown). In this example, % of sub-carriers carry data while the remaining ¼ are fixed known pilots for estimating the channels. As is conventional for OFDM, both OFDM symbols are prefaced by a cyclic prefix CP that is a repetition of the last part of the main OFDM symbol MS. The purpose of this is to isolate each symbol from its neighbour(s), i.e. to remove any overlap of the main OFDM symbols that might be caused by multipath propagation.

Each corresponding pair of OFDM symbol data sub-carriers DSC (i.e. each pair consisting of a sub-carrier in both OFDM symbols that have the same frequency, respectively) is encoded individually using Alamouti space time diversity as described in the document mentioned in the introductory part of the description. Specifically, the transmission matrix of Table 1 on page 1454 is used. For instance, a symbol part of symbol SY1 is transmitted with antenna All and the corresponding symbol part of symbol SY2 assigned to a sub-carrier having the same frequency is transmitted via antenna A12.

In one embodiment of the invention, the operations of Alamouti space time diversity are also applied to the corresponding pairs of pilot sub-carriers PSC. This allows the receiving transceiver to separate the estimates of the channels from the two transmitters to each of its antennas. Alternatively, the pilot sub-carriers PSC in the first symbol SY1 may be transmitted from one of the antennas All and the pilot sub-carriers PSC in the second symbol SY2 may be transmitted from the other antenna A12. However, this approach has the disadvantage that maintaining the overall transmitter power would require the pilot sub-carriers PSC to be transmitted at 3 dB higher power than if Alamouti processing is used.

For the purposes of wireless industrial control, the physical layer may include the following elements:
- at least two transceivers operating in TDD mode,
- the use of OFDM symbols in pairs for space time coding without any additional pilot-only symbols,
- the inclusion of OFDM pilot sub-carriers at substantially regular intervals in at least one pair of the OFDM symbols in such a way as to sound the paths separately from both transmitter antennas,
- the use of interleaving in the frequency domain,
- the use of FED encoding in the transmitter (not mandatory)
- the implementation of twin antenna Alamouti space time diversity in the transmitting end,
- the use of, at least, twin antenna diversity in the receiver (not mandatory),
- TDD switching in the transceivers such that the two antennas used by the transmitter when in transmit mode are used by the receiver when in receive mode (not mandatory).

In a preferred embodiment, the modulation on the sub-carriers is 64 QAM providing high bandwidth efficiency transmission of data in both directions over the air interface. The FEC may be implemented, for example, using a convolutional code. Although better error performance can be achieved by using a modern code such as a Turbo code (and use of such a code is not excluded), the requirements of low latency operation constrain the processing time available for decoding the FED code in the receiver. Use of a simpler code is beneficial in this regard.

The air interface packet of FIG 2 supports the transport of a telegram of a particular size. If the data to be transported is slightly greater than that then it would be necessary to increase the air interface packet size to four OFDM symbols (since the number of OFDM symbols must be even in order to support space time diversity).

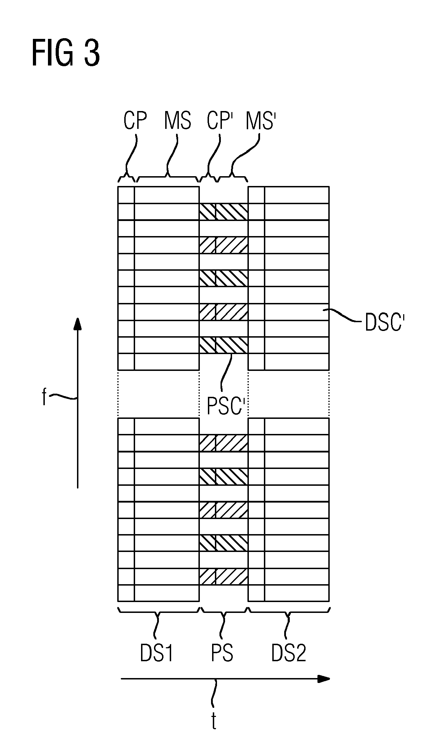

According to a further embodiment an optional refinement is possible that allows more payload data to be carried with only modest increase in air interface packet duration. The principle is to separate the sub-carrier pilots from the data OFDM symbols and incorporate them into a reduced duration pilot-only symbol. This is illustrated in FIG 3. The symbol packet shown there consists of a first data-only symbol DS1, a second data-only symbol DS2 and temporally in between a pilot-only symbol PS. The three symbols DS1, PS and DS2 are separated chronologically. In the frequency domain each symbol is interleaved by using a plurality of sub-carriers. The pilot-only symbol PS does not use all sub-carriers available for data-only symbols DS1 and DS2.

The pilot sub-carriers have been removed from the data OFDM symbols and incorporated into a central pilot-only symbol PS. Half of the main part of the pilot OFDM symbols PS has been removed (a residual main symbol MS' remains) whilst the cyclic prefix component CP' has been retained. In the example shown in FIG 3, the duration of the pilot symbol PS is 3/5 times the duration of the normal symbols DS1 or DS2. The reduction in symbol duration is acceptable because only alternate pilot sub-carriers are transmitted. The alternating interleaved pilots PSC' are transmitted from the two diverse transmitting antennas as illustrated in FIG 3 by the alternating shading direction. Although there is a reduction in duration of the pilot sub-carriers PSC' compared to those pilot sub-carriers PSC of FIG 2, this is compensated by increasing the transmitted power. The increase is acceptable because only alternating sub-carriers are active.

The effect of removing the pilot sub-carriers PSC' into the central location is to increase the number of sub-carriers DSC' available for data transmission. In FIG 2, 75% of sub-carriers are available for data transmission. In FIG 3, 100% of the sub-carriers are available - an increase of 33,3%. Given that the transmission time has increased by 30%, this is a useful option.

The advantages of the above described embodiments are as follows: An extremely high reliability of wireless communication is achieved through fourfold diversity. An efficient use of spectrum is obtained through high efficiency modulation (e.g. 64 QAM). A paired spectrum is not required for full duplex communication. The transceivers require only two antennas, whilst providing fourfold diversity. Rare failure modes due to deep fades on all diverse paths are correlated in both directions, effectively halving the mean time between link failures.

## Claims

1. Method of wirelessly transmitting data between two transceivers (TC1, TC2), each transceiver (TC1, TC2) having at least two antennas (All, A12, A21, A22), by performing transmission according to a telegram for transmission being **characterized by**
- operation of both transceivers (TC1, TC2) in a TDD mode,
- OFDM symbols in pairs without any additional pilot-only symbol (PS),
- interleaving in the frequency domain,
- inclusion of OFDM pilot sub-carriers (PSC, PSC') at substantially regular frequency intervals in at least one pair of the OFDM symbols, wherein both antennas (All, A12, A21, A22) of one of the transceivers (TC1, TC2) are used for transmission and
- implementation of twin antenna Alamouti space time diversity for transmission.

2. Method of wirelessly transmitting data between two transceivers (TC1, TC2), each transceiver (TC1, TC2) having at least two antennas (All, A12, A21, A22), by performing transmission according to a telegram for transmission being **characterized by**
- operation of both transceivers (TC1, TC2) in a TDD mode,
- a packet having two OFDM data-only symbols (DS1, DS2) and one OFDM pilot-only symbol (PS),
- interleaving in the frequency domain,
- the duration of the OFDM pilot-only symbol (PS) being reduced compared to the duration of each OFDM data-only symbol (DS1, DS2),
- both antennas (All, A12, A21, A22) of one of the transceivers (TC1, TC2) are used for transmission and
- implementation of twin antenna Alamouti space time diversity for transmission.

3. Method according to claim 1, wherein a convolutional forward error correction code is used in each transceiver (TC1, TC2).

4. Method according to claim 1 or 2, wherein each transceiver (TC1, TC2) includes two antennas (All, A12, A21, A22) for reception, and twin antenna diversity is used in each transceiver for reception.

5. Method according to one of the preceding claims, wherein TDD switching in the transceivers (TC1, TC2) is performed such that the two antennas (All, A12, A21, A22) in each transceiver (TC1, TC2) are used in a transmit mode as well as in a receive mode.

6. Method according to one of the preceding claims, wherein each symbol (DS1, DS2; PS) is transmitted by a plurality of sub-carriers (DSC, DSC'; PSC, PSC') which are interleaved in the frequency domain, and the modulation on the sub-carriers (DSC, DSC'; PSC, PSC') is 64 QAM.

7. Method according to one of the preceding claims, wherein each OFDM symbol includes a cyclic prefix component (CP).

8. Method according to claim 2, wherein the OFDM pilot-only symbol (PS) is arranged between the two OFDM data-only symbols (DS1, DS2).

9. Method according to claim 2 or 8, wherein a data part of each OFDM pilot-only symbol (PS) is half as long as a data part of each OFDM data-only symbol (DS1, DS2).

10. Communication system including:
- two transceivers (TC1, TC2) each having at least two antennas (All, A12, A21, A22), wherein said transceivers (TC1, TC2) are adapted for wirelessly transmitting data between each other according to a telegram for transmission,
- said telegram being **characterized by**:
○ operation of both transceivers (TC1, TC2) in a TDD mode,
o OFDM symbols in pairs without any additional pilot-only symbol (PS),
o interleaving in the frequency domain,
o inclusion of OFDM pilot sub-carriers (PSC, PSC') at substantially regular frequency intervals in at least one pair of the OFDM symbols, wherein both antennas (All, A12, A21, A22) of one of the transceivers (TC1, TC2) are used for transmission and
o implementation of twin antenna Alamouti space time diversity for transmission.

11. Communication system including:
- two transceivers (TC1, TC2) each having at least two antennas (All, A12, A21, A22), wherein said transceivers (TC1, TC2) are adapted for wirelessly transmitting data between each other according to a telegram for transmission,
- said telegram being **characterized by**:
○ operation of both transceivers (TC1, TC2) in a TDD mode,
o a packet having two OFDM data-only symbols (DS1, DS2) and one OFDM pilot-only symbol (PS),
o interleaving in the frequency domain,
o the duration of the OFDM pilot-only symbol (PS) being reduced compared to the duration of each OFDM data-only symbol (DS1, DS2),
o both antennas of one of the transceivers are used for transmission and
o implementation of twin antenna Alamouti space time diversity for transmission.

## Amended claims

### Amended claims in accordance with Rule 137(2) EPC.

1. Method of wirelessly transmitting data between two transceivers (TC1, TC2), each transceiver (TC1, TC2) having at least two antennas (All, A12, A21, A22), by performing transmission according to a telegram for transmission being **characterized by**
- operation of both transceivers (TC1, TC2) in a TDD mode,
- a packet having two OFDM data-only symbols (DS1, DS2) and one OFDM pilot-only symbol (PS),
- interleaving in the frequency domain,
- the duration of the OFDM pilot-only symbol (PS) being reduced compared to the duration of each OFDM data-only symbol (DS1, DS2),
- both antennas (All, A12, A21, A22) of one of the transceivers (TC1, TC2) are used for transmission and
- implementation of twin antenna Alamouti space time diversity for transmission.

2. Method according to claim 1, wherein a convolutional forward error correction code is used in each transceiver (TC1, TC2).

3. Method according to claim 1, wherein each transceiver (TC1, TC2) includes two antennas (All, A12, A21, A22) for reception, and twin antenna diversity is used in each transceiver for reception.

4. Method according to one of the preceding claims, wherein TDD switching in the transceivers (TC1, TC2) is performed such that the two antennas (All, A12, A21, A22) in each transceiver (TC1, TC2) are used in a transmit mode as well as in a receive mode.

5. Method according to one of the preceding claims, wherein each symbol (DS1, DS2; PS) is transmitted by a plurality of sub-carriers (DSC, DSC'; PSC, PSC') which are interleaved in the frequency domain, and the modulation on the sub-carriers (DSC, DSC'; PSC, PSC') is 64 QAM.

6. Method according to one of the preceding claims, wherein each OFDM symbol includes a cyclic prefix component (CP).

7. Method according to claim 1, wherein the OFDM pilot-only symbol (PS) is arranged between the two OFDM data-only symbols (DS1, DS2).

8. Method according to claim 1 or 7, wherein a data part of each OFDM pilot-only symbol (PS) is half as long as a data part of each OFDM data-only symbol (DS1, DS2).

9. Communication system including:
- two transceivers (TC1, TC2) each having at least two antennas (All, A12, A21, A22), wherein said transceivers (TC1, TC2) are adapted for wirelessly transmitting data between each other according to a telegram for transmission,
- said telegram being **characterized by**:
- operation of both transceivers (TC1, TC2) in a TDD mode,
- a packet having two OFDM data-only symbols (DS1, DS2) and one OFDM pilot-only symbol (PS),
- interleaving in the frequency domain,
- the duration of the OFDM pilot-only symbol (PS) being reduced compared to the duration of each OFDM data-only symbol (DS1, DS2),
- both antennas of one of the transceivers are used for transmission and
implementation of twin antenna Alamouti space time diversity for transmission.
